# EUROPEAN PATENT APPLICATION

(11) **EP 1 506 908 A2**
(43) Date of publication of application: **16.02.2005**
(21) Application number: 04254794.3
(22) Date of filing: 09.08.2004
(51) Int. Cl.: B62D 25/20, B62D 25/02, B62D 27/02

(54) **Magnetically pulse welded vehicle underbody**

(30) Priority: 12.08.2003 US 639412
(71) Applicant: DANA CORPORATION, Toledo, OH 43615 (US)
(72) Inventor: Martin, Samuel V., Perkasie, Pennsylvania 18944 (US); Rager, Christopher A., Womelsdorf, Pennsylvania 19567 (US); McGill, Scott M., Kenilworth, Pennsylvania 19465 (US)
(74) Representative: Giles, Ashley Simon

(57) **Abstract**

A vehicle frame assembly for an automotive vehicle comprises an underbody structural member including a generally planar floor portion, and one or more cross members. A plurality of metallic structural members includes body side structures wherein the body side structures are secured to the aluminum underbody structural member by magnetic pulse welding.

## Description

### BACKGROUND OF THE INVENTION

The present invention relates in general to framing an automotive vehicle, and, more specifically, to a space frame or a unibody using an aluminum underbody.

One typical type of vehicle frame assembly is made from a plurality of structural members. The structural members are held in juxtaposition by temporarily affixing or loosely clamping them together at a first framing workstation. The temporarily affixed or clamped structural members are then moved to a second workstation where the structural members are specifically positioned relative to one another by a variety of fixtures and the structural members are secured to one another by a plurality of spot welds. The spot welded structure is moved to a third framing station where the clamps are removed and another welding operation is performed to permanently secure all of the structural members together to form a single vehicle frame. Alternative framing operations include providing a first set of structural members (e.g., underbody) at a first workstation. A second set of structural members (e.g., body sides) are assembled to the underbody. The underbody and the second set of structural members are moved to a second workstation where a third set of structural members such a roof frames and roofing cross members are assembled. The assembled structural members is then moved to a fourth workstation where additional inner framing structures may be added for assembly. The assembled structural members are then moved to a fifth workstation where all framing joints are then permanently welded. These common types of framing and assembly operations utilize numerous manufacturing operations, added equipment at the various workstation locations, and added manufacturing space to perform the numerous framing and assembly operations.

Vehicle frames require high strength framing for various purposes which include stability, reliability, crashworthiness, low NVH, and riding comfort. Manufacturers of vehicles are constantly redesigning vehicle frames to reduce the overall weight of the vehicle for increasing fuel economy while maintaining the high strength features of the vehicle frame. Furthermore, the cost of manufacturing the vehicle frames can be kept low by manufacturing the framing assemblies with few operations and minimal specialized equipment.

Aluminum frame components have been used as substitutes for steel framing parts. Aluminum components in certain designs can lower the cost and weight of the vehicle frame while maintaining required features such as high strength and reliability. However, substitution of aluminum has not been completely successful. For example, aluminum (i.e., having anodic properties) when combined with another metal or alloy (i.e., having high cathodic properties) may accelerate the corrosion of the aluminum. Combining aluminum with non-aluminum components close to its anodic index (such as steel) reduces the effects of galvanic corrosion and creates advantages such as higher strength, improved NVH, lower weight, and lower cost as opposed to using 100% aluminum. However, manufacturing of such composites structures has resulted in numerous and complex manufacturing operations including multiple workstations and excessive measures to ensure sufficient assembly and joint strength between aluminum components and other components.

### SUMMARY OF THE INVENTION

The present invention provides a vehicle frame assembly with an aluminum underbody which is magnetically pulse welded to a plurality of other structural members wherein the other structural members are made of a dissimilar metallic material. The invention results in the advantages of reduced overall vehicle structure weight and cost of the framing assembly while creating high strength joints between structural components of different metallic composition.

In one aspect of the invention, a vehicle frame assembly for an automotive vehicle comprises an underbody structural member including a generally planar floor portion, and one or more cross members. A plurality of dissimilar metallic structural members includes body side structures wherein the body side structures are secured to the underbody structural member by magnetic pulse welding.

### BRIEF DESCRIPTION OF THE DRAWINGS

FIG. 1 is an exploded view of a vehicle framing assembly according to a preferred embodiment.
FIG. 2 is a perspective view of structural members being assembled at a magnetic pulse welding station.
FIG. 3 is a perspective view of a magnetic pulse welder aligned with a respective tubular cross member and body side joint.
FIG. 4a is an elevational view of a preferred embodiment of a joint illustrated in FIG. 3 between a respective tubular cross member and a side rail.
FIG. 4b is an elevational view of a preferred embodiment of a joint as illustrated in FIG. 4a formed between the respective tubular cross member and the side rail of the body side by magnetic pulse welding.
FIG. 5 is a perspective view of a vehicle framing assembly illustrating the various structural members joined by magnetic pulse welding.

### DETAILED DESCRIPTION OF PREFERRED EMBODIMENTS

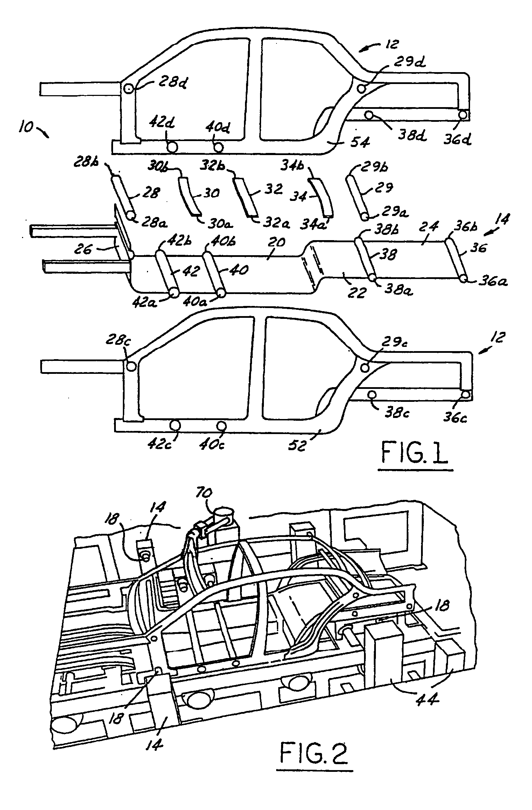

Referring now to the Drawings and particularly to FIG. 1, there is shown a plurality of individual automotive structural members of a vehicle frame assembly 10. The individual components comprise an underbody 14 including one or more cross members 36, 38, 40, and 42, and left and right body sides 12. The body sides 12 are preferably made of steel. The cross members 36, 38, 40, 42 may include at least one tubular cross member and are preferably made of aluminum.

The underbody 14 is a structure having a generally planar surface made of stamped aluminum. Alternatively, other metallic materials such as steel or magnesium may be used. The generally planar surface of the underbody 14 may include various planar surfaces including a main floor portion 20, a mid floor portion 22, a trunk floor portion 24, and a bulkhead portion 26. The underbody 14 includes underbody cross members 36, 38, 40, and 42 spaced apart from one another. Preferably, the underbody cross members 36, 38, 40, and 42 are integrally cast with and extend transverse to the trunk floor portion 24 and the main floor portion 20. Alternatively, the underbody cross members 36, 3 8, 40, 42 may be attached to the underbody 14 by methods such as welding or adhesives. In the preferred embodiment, the underbody cross members 36, 38, 40, and 42 are tubular and may comprise the shapes of, but are not limited to, circles, ovals, rectangles, squares, trapezoids, parallelograms, triangles, and polygons of greater than four sides. The underbody cross members 36 and 38 include ends 36a, 36b, 38a, and 38b extending though and beyond the planar surface of the trunk floor portion 24. Additionally, the underbody cross members 40 and 42 include ends 40a, 40b, 42a, and 42b extending through and beyond the planar surface of the main floor portion 20.

The body sides 12 are preferably a steel frame structure. The body sides 12 include a plurality of apertures, each receiving an end of a respective cross member. The plurality of apertures is formed through an inner and outer wall of a structural channel member 52 and 54 of the body sides 12. The respective aperture is substantially the same shape as the respective cross member to which it mounts. In one preferred embodiment, the respective aperture and cross member are circular in shape and the respective aperture has an inner diameter that is slightly larger than an outer diameter of the respective end so that the respective end may be inserted into the respective aperture. If another shape is utilized for the respective cross member and aperture, then the perimeter of the respective aperture will be slightly larger than the perimeter of the respective end so as to insert the respective end in the respective aperture. The body sides 12 include apertures 36c, 36d, 38c, and 38d and 40c, 40d, 42c, and 42d for respectively receiving ends 36a, 36b, 38a, and 38b of the trunk floor portion 24 and the ends 40a, 40b, 42a, and 42b of the main floor portion 20 so as to adjoin the body sides 12 to the underbody 14 after welding.

The vehicle frame assembly 10 may include a plurality of secondary cross members 11 interconnecting the body sides 12 (e.g. at the top ends). In the preferred embodiment, a secondary cross member 28 is located forward in the vehicle and a secondary cross member 29 is located rearward in the vehicle for adding torsional stability and strength to a middle portion of the vehicle frame assembly 10. The secondary cross members 28 and 29 can be tubular and made of steel or any other similar or dissimilar metallic metal.

In the preferred embodiment, the secondary cross members 28 and 29 have a first end 28a and 29a and a second end 28b and 29b that extend perpendicular to the body sides 12. The body sides 12 include apertures 28c, 28d, 29c, 29d for receiving the respective ends. The first and second ends 28a, 28b, 29a, 29b extend through the inner and outer wall of the apertures 28c, 28d, 29c, and 29d to adjoin the body sides 12 after magnetic pulse welding, although other suitable methods of attachment may be utilized. For example, magnetic pulse forming may be used to achieve an interference fit between the cross members and the body sides (which may also be supplemented by a secondary joining operation such as adhesive bonding or arc welding). Such an interference fit may include the use of a noncircular aperture to improve retention of the expanded portions of the tubular cross member.

Other secondary cross members 30, 32, and 34 may be generally flat band and are attached to a top surface of the body sides 12 for adjoining the upper portion of the body sides 12 to add stability and support for an overhead roof line of a vehicle. Since, the secondary cross members 30, 32, and 34 provide support for lighter loads than the underbody 14, the secondary cross members 30, 32, 34 may be made with a lightweight material such as magnesium. The joining of the secondary cross members 30, 32, 34 and the body sides 12 can be accomplished by attachment methods other than magnetic pulse welding, such as magnetic pulse forming, structural adhesives, rivets, fasteners, laser welding, MIG welding, MIG brazing or spot welding.

FIG. 2 shows a vehicle frame assembly showing a welding process for adjoining the plurality of structural members. The vehicle frame assembly is made by interconnecting the respective end of a first structural member with the respective aperture of a second structural member to form a joint. The joint is permanently secured using an internal magnetic pulse welding process. Magnetic pulse welding is generally known in the art and includes an inductive coil 18 that is carried at an end of a moveable support 44. The inductive coil 18 comprises a winding of an electrical conductor having conductive leads (not shown) connected to a power source (not shown). When the inductive coil is energized by the power source, current flows through the inductive coil 18 creating a high intensity electromagnetic field around the inductive coil 18. The high intense electromagnetic field generates eddy currents in the material surrounding the inductive coil. The material having the eddy currents induced in it should be the higher conductive material of the two materials being bonded. The higher the conductivity properties of the material, the better suited the material is for magnetic pulse welding. The strong current generated by the inductive coil 18 and the eddy currents induced on the material surrounding the inductive coil create very strong opposing magnetic fields. As a result, the strong opposing magnetic fields repel one another, but because the currents in the inductive coil 18 are stronger than that in the surrounding material, the surrounding material is forced away from the inductive coil 18 at a very high velocity toward the second material and that the surrounding material is thereby infused into the surrounding material.

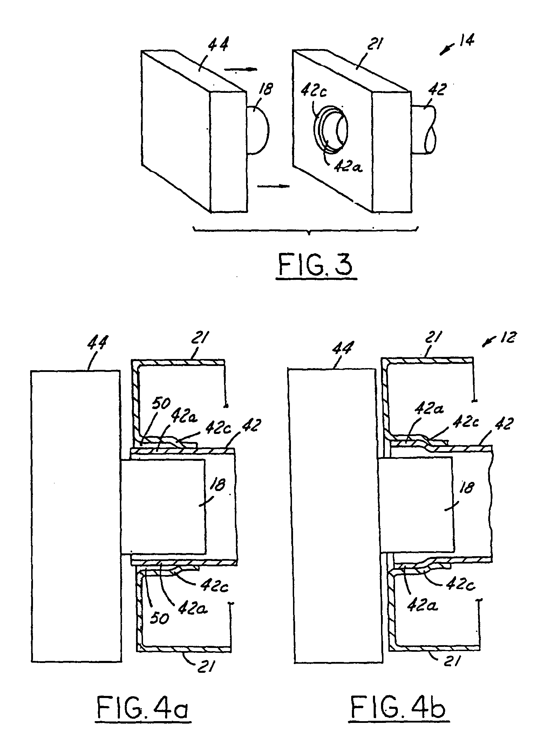

The underbody cross members 36, 38, 40, and 42 and secondary cross members 28 and 29 have an inner diameter that is slightly larger than an outer diameter of the inductive coil 18 to allow for the insertion of the inductive coil 18 at each respective joint. Moveable support 44 is shifted toward a respective joint as shown in FIG. 3. When joining cross member 42, for example, the inductive coil 18 is inserted within the inner diameter of end 42a. The inductive coil 18 is then energized by the power source. Each inductive coil may be energized at substantially the same time so as to magnetically pulse weld the underbody 14 to the body sides 12 simultaneously in one manufacturing operation. As described earlier, the presence of the electromagnetic field causes the end 42a of cross member 42 to expand radially outward at a high velocity. The expanding end 42a is thrust against the inner diameter of the aperture 42c at a high velocity and causes portions of the end 42a engaged with the portions of aperture 42c to weld or molecularly bond together. The result is a very high strength weld.

FIG. 4a shows the inductive coil 44 inserted within the end 42a. Prior to magnetic pulse welding, an annular gap 50 is present between the inner diameter of aperture 42c and the outer diameter of the end 42a. Annular gap 50 is initially formed between the outer diameter portion of end 42a and the inner diameter portion aperture of 42c to provide a sufficient amount of distance to allow the electromagnetic field to accelerate the end 42a to a high velocity toward the inner diameter of the aperture 42c during application of a pulse. After the inductive coil 18 is energized and the end 42a is radially thrust against the inner diameter wall of 42c, the annular gap 50 presently occupying the space between end 42a and aperture 42c is closed and the impact of end 42a with wall 42c results in the joinder of the two dissimilar metallic materials thereby forming a high strength weld or molecular bond as shown in FIG. 4b.

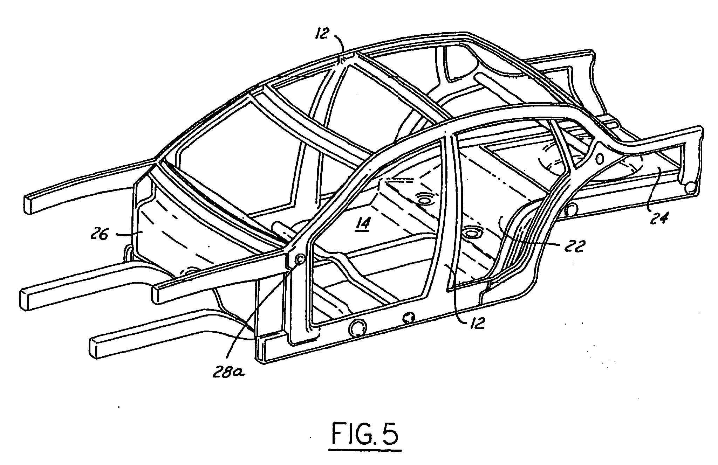

FIG. 5 illustrates a finished vehicle framing assembly using an aluminum multi-planar surface underbody 14 permanently attached to the steel body sides 12 by magnetic pulse welding. As discussed earlier, various structural members of the vehicle frame assembly can be formed or joined with different metallic material. Some of the structural members may be formed from a first metallic material while an adjoining structural member may be formed from a second metallic material. For example, the cross members 36, 38, 40, and 42 are formed from aluminum, while the remainder of the connecting structural members such as the underbody 14 and the body sides may be formed from lightweight material such as magnesium or aluminum or may be formed from a heavier material such as steel for added reinforcement. Molecular bonding of the vehicle framing assembly using magnetic pulse welding is advantageous not only because of weight reduction but also because the dissimilar materials have been found not to cause corrosion. Because the weld is formed air tight, no electrolytes are present within the weld to commence a galvanic reaction. Any exposure on the exterior surface can always be treated with a corrosion inhibitor. Alternative materials such as magnesium may be used in place of the above described materials to further increase weight efficiency. Furthermore, steel may be welded to steel to supplement the above identified process. Aluminum to aluminum, magnesium to magnesium, or the joinder of many similar or dissimilar metallic materials may be used.

From the foregoing description, one ordinarily skilled in the art can easily ascertain the essential characteristics of this invention and, without departing from the spirit and scope thereof, can make various changes and modifications to the invention to adapt it to various usages and conditions. For example, various structural attachments and joints may be utilized between the side rails of the body sides and the cross members. Furthermore, external magnetic pulse welding may be utilized as opposed to internal magnetic pulse winding.

## Claims

1. A vehicle frame assembly for an automotive vehicle comprising:
an underbody structural member including a generally planar floor portion, and at least one cross member; and
a plurality of metallic structural members including body side structures having joints secured to said underbody structural member by magnetic pulse welding.

2. The vehicle frame assembly of claim 1 wherein said generally planar floor portion is a multi-planar surface.

3. The vehicle frame assembly of claim 2 wherein said multi-planar surface includes a main floor portion, a mid floor portion, a trunk floor portion, and a bulkhead portion.

4. The vehicle frame assembly of claim 1 wherein said underbody structural member comprises aluminum.

5. The vehicle frame assembly of claim 1 wherein said underbody structural member comprises steel.

6. The vehicle frame assembly of claim 1 wherein said cross members are tubular.

7. The vehicle frame assembly of claim 6, wherein said tubular cross members have a geometrical shape selected from a group comprising a circle, oval, rectangle, square, triangle, and polygon of greater than four sides.

8. The vehicle frame assembly of claim 6 wherein said body side structures include apertures, wherein said tubular cross members are received in said apertures.

9. The vehicle frame assembly of claim 6 wherein said magnetic pulse welding includes an internal magnetic pulse welding process.

10. The vehicle frame assembly of claim 1 wherein said body side structures comprise steel.
